# EUROPEAN PATENT SPECIFICATION

(11) **EP 1 809 871 B1**
(45) Date of publication and mention of the grant of the patent: **11.01.2012**
(21) Application number: 04797831.7
(22) Date of filing: 11.11.2004
(51) Int. Cl.: F02B 37/007, F02B 37/013, F02B 37/24, F02B 37/22, F02B 37/16

(54) **TURBOCHARGER SYSTEM AND CONTROL METHODS FOR CONTROLLING A TURBOCHARGER SYSTEM**
TURBOLADERSYSTEM UND STEUERVERFAHREN ZUR STEUERUNG EINES TURBOLADERSYSTEMS
SYSTÈME DE TURBOCOMPRESSEURS ET PROCÉDÉS DE COMMANDE POUR COMMANDER UN SYSTÈME DE TURBOCOMPRESSEURS

(43) Date of publication of application: 25.07.2007
(73) Proprietor: Honeywell International Inc., Morristown, NJ 07960 (US)
(72) Inventor: BARTHELET, Pierre, F-88200 Remiremont (FR)
(74) Representative: TBK
(86) International application number: PCT/EP2004/012806
(87) International publication number: WO 2006/050746

(56) References cited:
- EP-A- 0 275 244
- EP-A- 0 972 924
- DE-A1- 2 818 447
- DE-A1- 19 514 572
- US-A- 4 502 282
- US-B1- 6 279 320

## Description

The invention relates to a turbocharger system for an engine comprising at least a small and a large compressor and at least a small and a large turbine and methods for controlling a turbocharger system having a small turbine and a large turbine. The small compressor and the small turbine form a small turbocharger. The large compressor and the large turbine form a large turbocharger.

In the prior art document WO 2004/046519 A1, a multistage turbocharger system is shown. On an intake side of an engine, the system comprises two compressors connected in parallel and, on an exhaust side of the engine, the system comprises two turbines connected in parallel.

There is a need to provide an improved turbocharger system providing an efficient and smooth boost characteristic, and there is also a need to provide improved methods for controlling a turbocharger system providing an efficient and smooth boost characteristic.

An improved turbocharger system is defined by the features of claim 1 and its dependent claims, and improved methods are defined by the features of claims 16 and 23 and their dependent claims.

According to an aspect of the invention, the turbocharger system for an engine comprises at least a small and a large compressor arranged in series, at least a small and a large turbine arranged in parallel and a shut-off arrangement for interrupting exhaust gas flow through the small and/or the large turbine.

Accordingly, the actuation or operation of the respective turbocharger, i.e. the respective turbine, can be selectively switched on and off by actuating a shut-off arrangement in order to interrupt or inhibit an exhaust gas flow. By interrupting the flow through a respective turbine, the efficiency of the other turbine may be enhanced and energy losses may be reduced. The turbines and the respective characteristics of the respective turbocharger can be used separately. Further, by allowing the flow through both turbines, the combined characteristics of both turbines may be used. In this case, by having arranged the compressors one after the other, higher overall pressures may be obtained.

As a particular advantageous aspect, the small turbine and/or the large turbine comprise(s) a variable nozzle device.

Herewith, a smooth transition of the boost performance may be achieved when switching the exhaust gas flow between both turbochargers, i.e. when switching from one turbocharger to the other or when switching from a state having one turbocharger in operation to a state having two turbochargers in operation.

According to a further advantageous aspect, the shut-off arrangement comprises at least one of a small turbine shut-off valve and a large turbine shut-off valve being arranged upstream or downstream the respective turbine. Alternatively, the shut-off arrangement is a three way valve.

Accordingly, it is possible to provide a shut-off arrangement to interrupt the exhaust gas flow to one of the turbines with a simple and effective assembly at low costs.

In another preferred form, a shut-off arrangement is a variable nozzle device of each turbine that can fully close the flow path through the variable nozzle.

Thus, it is possible to interrupt the exhaust gas flow through the respective turbine within the respective turbine. Accordingly, no additional valves are necessary so that a more compact turbocharger system with fewer components is obtained.

Additionally, a small compressor bypass line with a small compressor bypass valve bypassing the small compressor may be provided.

Herewith, the small compressor can be selectively bypassed. Insofar, having high intake air flows, e.g. in a high engine speed range, the pressure loss due to the small compressor and oil leakage of the small compressor may be minimized.

Furthermore, a large compressor bypass line with a large compressor bypass valve bypassing the large compressor may be provided.

Herewith, the large compressor can be selectively bypassed. Accordingly, oil leakage of the large compressor can be avoided and pressure losses may be minimized when the large compressor is not in operation.

When an engine comprising such a turbocharger system is a V engine, the above turbocharger system enables a compact overall structure which fits between the cylinder benches of a V-engine.

In a further aspect of the invention, a method for controlling a turbocharger system comprising any combination of the above features and aspects is provided, wherein, in a low engine speed range, the exhaust gas flow through the large turbine is interrupted by the shut-off arrangement and the exhaust gas flow through the small turbine is allowed. Further, in a medium engine speed range, the exhaust gas flow through the small turbine and the large turbine is allowed. Finally, in a high engine speed range, the exhaust gas flow through the small turbine is interrupted by the shut-off arrangement and the exhaust gas flow through the large turbine is allowed.

Accordingly, the turbocharger system is preferably operated in accordance to the speed ranges low, medium and high so that the overall boost of the turbocharger system is adapted to these speed ranges or operational ranges of the engine using the advantages of the different turbocharger without deteriorating the efficiency. In other words, sufficient smoothened boost may be provided over the whole engine speed range with reduced energy losses.

Preferably, in particular, each of the turbines comprises a variable nozzle device, wherein in the low engine speed range, the variable nozzle device of the small turbine is controlled to open gradually with increasing engine speed and the variable nozzle device of the large turbine is closed or maintained in a given fixed position. Further, in the medium engine speed range, the variable nozzle device of the small turbine is controlled to close gradually with increasing engine speed and the variable nozzle device of the large turbine is controlled to open gradually with increasing engine speed. Moreover, in the high engine speed range, the variable nozzle device of the large turbine is controlled to open gradually with increasing engine speed and the variable nozzle device of the small turbine is closed or maintained in a given fixed position. For the purposes of this description, when the variable nozzle device of a turbine is said to be "closed" this configuration includes conditions in which the nozzle is substantially closed so that only a nominal amount of mass flows therethrough.

While using variable nozzle devices for the turbines, the variable nozzle devices may be controlled in the different engine speed ranges so that, in case of switching on or disconnecting one of the turbines, an improved smooth boost over the whole speed range may be achieved. In other words, a smoother transition when switching turbines can be provided.

In a particular form of the method, the small compressor has a small compressor bypass line with a small compressor bypass valve, wherein in the low engine speed range, the small compressor bypass valve is closed. Further, in the medium engine speed range, the small compressor bypass valve is closed. And, in the high engine speed range, the small compressor bypass valve is open.

According to this method, in the low and medium engine speed ranges, sufficient boost can be provided by operating either the small compressor or both of the small and the large compressor in series. On the other hand, in the high engine speed range, pressure loss due to high air flows and also oil leakage of the small compressor can be prevented by bypassing the small compressor.

At this, the low engine speed range may be in the range of 0 to 2000 rpm, the medium engine speed range may be in the range of 1000 to 2500 rpm, and the high engine speed range may be in the range of 2000 rpm and more.

According to another aspect of the invention, a method for controlling a turbocharger system for an engine having a large turbocharger with a large turbine and a small turbocharger with a small turbine is provided. The method comprises the steps switching off an exhaust gas flow through the large turbine and switching on an exhaust gas flow through the small turbine in a low engine speed range, switching on the exhaust gas flow through the large and small turbine in a medium engine speed range, and switching on the exhaust gas flow through the large turbine and switching off the exhaust gas flow through the small turbine in a high engine speed range.

Accordingly, the turbocharger system is operated in accordance to the speed ranges low, medium and high so that the overall boost of a turbocharger system using a small and a large turbocharger is adapted to these speed ranges or operational ranges of the engine using the advantages of the different turbochargers without deteriorating the efficiency. In other words, sufficient smoothened boost may be provided over the whole engine speed range with reduced energy losses.

The previous method may comprise the step of gradually opening a variable nozzle device of the small turbine with increasing engine speed and maintaining closed or in a given fixed position a variable nozzle device of the large turbine in the low engine speed range, gradually closing the variable nozzle device of the small turbine with increasing engine speed and gradually opening a variable nozzle device of the large turbine with increasing engine speed in the medium engine speed range, and gradually opening the variable nozzle device of the large turbine with increasing engine speed and maintaining closed or in a given fixed position the variable nozzle device of the small turbine in the high engine speed range.

While using variable nozzle devices for the turbines, the variable nozzle devices may be controlled in the different engine speed ranges so that, in case of switching on or disconnecting one of the turbines, an improved smooth boost over the whole speed range may be achieved. In other words, a smoother transition when switching turbines can be provided.

Preferably, the method comprises the steps of keeping closed a small compressor bypass line of a small compressor of the small turbocharger in the low engine speed range, keeping closed the small compressor bypass line in the medium engine speed range, and keeping open the small compressor bypass line in the high engine speed range.

According to this method, in the low and medium engine speed ranges, sufficient boost can be provided by operating either the small compressor or both of the small and the large compressor in series. On the other hand, in the high engine speed range, pressure loss due to high air flows and also oil leakage of the small compressor can be prevented by bypassing the small compressor.

At this, the low engine speed range may be in the range of 0 to 2000 rpm, the medium engine speed range may be in the range of 1000 to 2500 rpm, and the high engine speed range may be in the range of 2000 rpm and more.

In another further aspect of the invention, a method for controlling a turbocharger system comprising any combination of the features of the turbocharger system is provided, wherein, in a low engine speed range, the exhaust gas flow through the large turbine is interrupted by the shut-off arrangement and the exhaust gas flow through the small turbine is allowed, and, in a high engine speed range, the exhaust gas flow through the small turbine and the large turbine is allowed.

Accordingly, two operation ranges for operating the turbocharger system are provided providing an efficient and smooth boost performance of the whole engine speed range.

Preferably, each of the turbines comprises a variable nozzle device, wherein, in the low engine speed range, the variable nozzle device of the small turbine is controlled to open gradually with increasing engine speed and the variable nozzle device of the large turbine is closed or in a given fixed position, and, in the high engine speed range, the variable nozzle device of the small turbine is controlled to close gradually with increasing engine speed and the variable nozzle device of the large turbine is controlled to open gradually with increasing engine speed.

Accordingly, a better transition is provided between the two engine speed ranges.

At this, the low engine speed range may be in the range of 0 to 2000 rpm, and the high engine speed range may be in the range of 1000 rpm and more.

In an additional aspect of the invention, a method for controlling a turbocharger system for an engine having a large turbocharger with a large turbine and a small turbocharger with a small turbine comprises the steps of switching off an exhaust gas flow through the large turbine and switching on an exhaust gas flow through the small turbine in a low engine speed range, and switching on the exhaust gas flow through the large turbine and switching off the exhaust gas flow through the small turbine in a high engine speed range.

Thus, only two operation ranges for operating a turbocharger system having two turbochargers are provided enabling an enhanced and proper boost control over the whole engine speed range by deactivating the large compressor in the low engine speed range.

Preferably, the method comprises the steps of gradually opening a variable nozzle device of the small turbine with increasing engine speed and maintaining closed or in a given fixed position a variable nozzle device of the large turbine in the low engine speed range, and gradually closing the variable nozzle device of the small turbine with increasing engine speed and gradually opening the variable nozzle device of the large turbine with increasing engine speed in the high engine speed range.

Thus, a better transition and smooth transition between the low engine speed range and the high engine speed range is provided.

At this, the low engine speed range may be in the range of 0 to 2000 rpm, and the high engine speed range may be in the range of 1000 rpm and more.

The above described aspects of methods for controlling a turbocharger system may also be used with differently arranged turbocharger systems.

The above mentioned and further solutions to the problem according to the invention with their features and advantages result from the following description of embodiments of the invention with reference to the drawings. In the drawings:
Fig. 1 schematically shows a layout of a turbocharger system according to a first embodiment of the invention.
Fig. 2 shows a method for operating the turbocharger system according to the first embodiment of the invention.
Fig. 3 schematically shows a diagram showing operating conditions of a small turbine variable nozzle device, a large turbine variable nozzle device, a small turbine valve, a large turbine valve and a small compressor bypass valve with respect to an engine speed according to the first embodiment.
Fig. 4 shows a modified method for operating the turbocharger system according to the first embodiment.

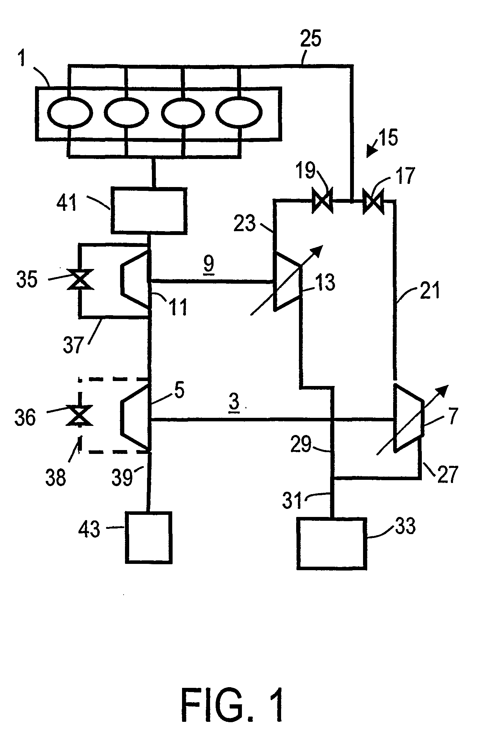

Fig. 1 shows the layout of a turbocharger system of the first embodiment. In Fig. 1, an internal combustion engine comprising four cylinders is denoted with 1. A low pressure turbocharger 3 (in the following a large turbocharger 3), and a high pressure turbocharger 9 (in the following a small turbocharger 9), are connected to the intake and exhaust manifolds of the engine 1. The large turbocharger 3 comprises a low pressure compressor 5 (in the following a large compressor 5) connected to a low pressure turbine 7 (in the following a large turbine 7) including a variable nozzle turbine device (hereinafter "VNT") via a shaft, and the small turbocharger 9 comprises a high pressure compressor 11 (in the following a small compressor 11) connected to a high pressure turbine 13 (in the following a small turbine 13) including a variable nozzle turbine device (VNT) via a shaft. The VNT configurations are illustrated graphically in the attached figures by the arrows on turbines 7 and 13.

At the intake side of the engine 1, the large compressor 5 and the small compressor 11 are connected sequently or in series to an intake line 39. The large compressor 5 is arranged upstream the small compressor 11, i.e. an outlet of the large compressor 5 is connected to an inlet of the small turbine 11.

With respect to the exhaust side of the engine 1, the large turbine 7 and the small turbine 13 are connected in parallel to each other. In detail, a main exhaust line 25, i.e. an exhaust gas manifold, branches downstream in two lines, a small turbine intake line 23 and a large turbine intake line 21. In the small turbine intake line 23, a small turbine shut-off valve 19 (in the following a small turbine valve 19) is arranged. The small turbine valve 19 is adapted to switch between an open state and a closed state. In the closed state, exhaust gas flow is inhibited to flow to and through the small turbine 13. Comparably, a large turbine shut-off valve 17 (in the following a large turbine valve 17) is arranged in the large turbine intake line 21 adapted to switch between an open state and a closed state. In the closed state of the large turbine valve 17, no exhaust gas can flow to and through the large turbine 7.

A small turbine discharge line 29 and a large turbine discharge line 27 are connected to an outlet of the small turbine 13 and an outlet of the large turbine 7, respectively. The small turbine discharge line 29 and the large turbine discharge line 27 merge downstream the turbines forming an exhaust line 31 and entering the further exhaust gas system 33 of the vehicle which may comprise catalysts and so on.

The small compressor 13 is bypassed by a small compressor bypass line 37 (in the following a small compressor bypass 37). The small compressor bypass 37 can be opened and closed or blocked and unblocked by means of a small compressor bypass valve 35 which is arranged in the small compressor bypass 37.

Further, downstream the small compressor 11, a charge air cooler 41 can be connected to the intake line 39. Upstream the large compressor 5, an air filter 43 can be connected to the intake line 37 for filtering intake air.

Further, in a modified embodiment of the first embodiment, the large compressor 5 is bypassed by a large compressor bypass line 38 and a large compressor bypass valve 36 arranged in the large compressor bypass line 38 as shown by a broken line in Fig. 1.

In a second embodiment of the invention, which is not shown in the figures, the shut-off arrangement is embodied by a three way valve. According to this embodiment, the main exhaust line is connected to the input port of the three way valve and the small and the large turbine intake lines are connected to the outlet ports of the three way valve. The three way valve is adapted to switch between the small and the large turbine side to open one of the turbine intake lines. Further, the three way valve may open both outlet ports, i.e. may allow exhaust gas flow through both turbines.

In a third embodiment of the invention, which is not shown in the figures, the small turbine valve and the large turbine valve are arranged in the discharge lines of the small turbine and the large turbine, respectively. Accordingly, the exhaust gas flow may be interrupted downstream the respective turbines.

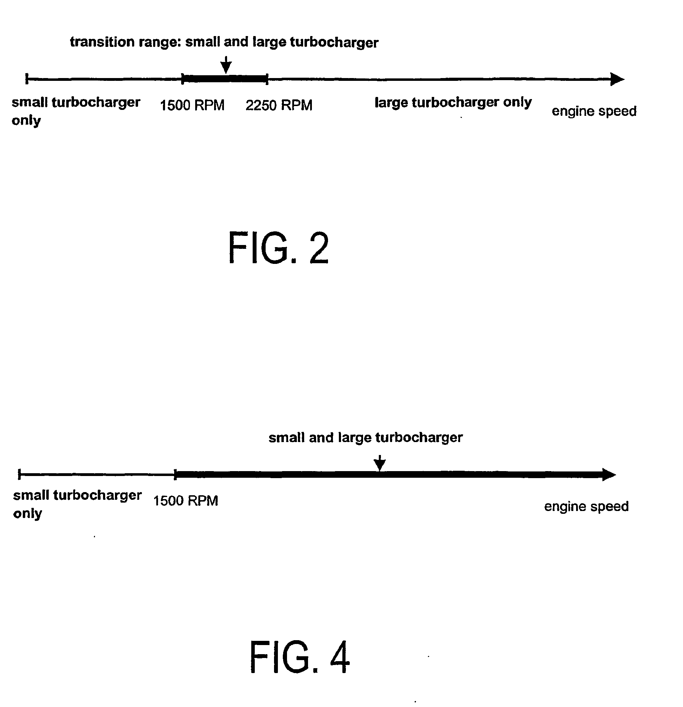

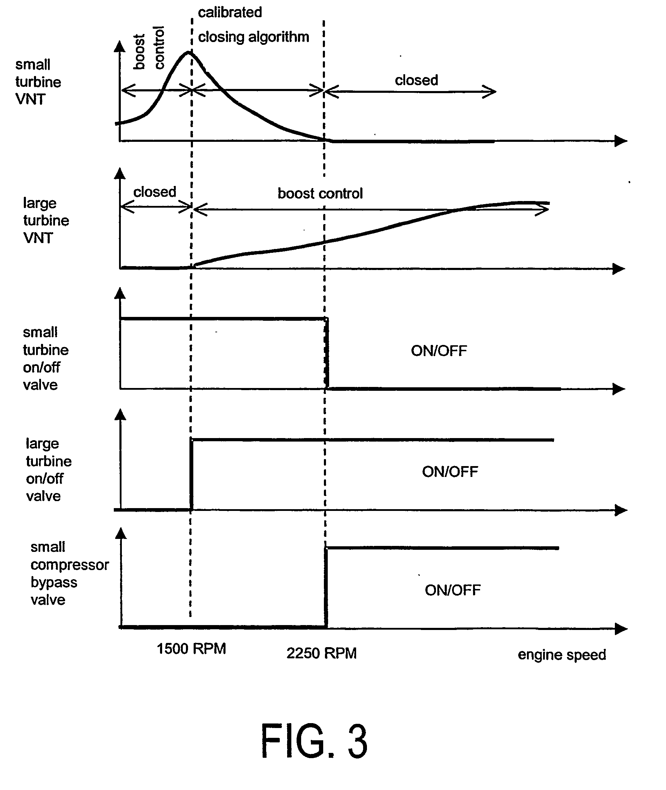

Below, an operation of the turbocharger system according to the first embodiment is described with respect to figures 2 and 3.

According to Fig. 2, the operation range of the turbocharger system is partitioned or divided in three adjacent operating ranges, a low engine speed range, a medium engine speed range and a high engine speed range. In the low engine speed range, 0 to about 1500 rpm, the small turbocharger 9 is in operation and the large turbocharger 3 is off, in the medium engine speed range, about 1500 to about 2250 rpm, both of the small turbocharger and the large turbocharger are in operation and, in the high engine speed range, about 2250 rpm and more, the large turbocharger 3 is in operation and the small turbocharger 9 is off. The above speed ranges may differ according to engine type and application.

In the following, the operation of the respective elements of the turbocharger system, i.e. the turbine valves 19, 17, the small compressor bypass valve 35 and the variable nozzle devices (VNT) of the turbines 13, 7, is described in detail with respect to the three operating ranges according to Fig. 3.

In the low engine speed range, the small compressor bypass valve 35 is in the off position so that the intake air flowing through the air filter 43 and through the large compressor 5 flows completely through the small compressor 13. In other words, the small compressor bypass 37 is closed. Further, with respect to the exhaust gas side, the small turbine valve 19 is open whereas the large turbine valve 17 is closed. Thus, the whole exhaust gas flow passes through the small turbine 13 before flowing into the exhaust gas system 31, 33 and further out into the ambient. The variable nozzle device of the large turbine 7 is in a closed position during the low engine speed range. At the beginning of the low speed range, the variable nozzle device of the small turbine 13 is in a small position, i.e. in a position wherein a large pressure differential is created across the turbine causing increased rotation of the turbine which in turn causes the small compressor to generate the highest possible boost. With increasing engine speed, the variable nozzle device is opened gradually according to a predetermined control map or the like in order to control the boost of the small compressor 11 until the end of the low engine speed range is reached. Accordingly, only the small turbocharger 9 is in operation in this engine speed range.

In the medium engine speed range, on the intake side of the turbocharger system, the small compressor bypass 37, i.e. the small compressor bypass valve 35, is still kept closed. On the exhaust gas side of the engine 1, both turbine valves 19 and 17 are open. Accordingly, the exhaust gas flow branches or is divided in two separate exhaust gas flows passing the small turbine 13 and the large turbine 7, respectively. To that effect, both turbines 7, 13 and thus both turbochargers 3, 9 are active and in operation. At the start of the medium engine speed range, the variable nozzle device of the large turbine 7 is controlled to open gradually from the closed position in order to maintain boost pressure at a required level by engine calibration. On the other hand, the variable nozzle device of the small turbine 13 is gradually closed from the beginning of the medium speed range to the closed position at the end of the medium speed range in accordance to a calibrated closing algorithm. Consequently, the overall boost of the turbocharger system is changed smoothly from the boost of only the small turbocharger 9 to the boost of the large turbocharger 3.

Finally, in the high engine speed range, the small compressor bypass 37 is open, i.e. the small compressor bypass valve 35 is opened. Further, the small turbine valve 13 is in the closed position in order to inhibit exhaust gas flow to and through the small turbine 13. On the other hand, the large turbine valve 17 is in the fully open position. Thus, the exhaust gas flow passes through the large turbine 7 so that only the large turbocharger 3 is active or put into operation. The variable nozzle device of the inactive small turbine 13 is kept in the closed position, whereas the variable nozzle device of the active large turbine is gradually further opened from the above mentioned medium open position at the end of the medium speed range. Consequently, the boost of the turbocharger system is solely controlled or regulated via the large turbocharger 3 in the high engine speed range.

Summarized, according to the control procedure shown in Fig. 3, a smooth boost control of the turbocharger system is realized over the whole engine speed range without having a distinct step in the boost performance.

Further, in a control of the modified embodiment of the first embodiment, the large compressor bypass valve 36 may be closed, when the exhaust gas flow through or to the large turbine 7 is inhibited, and may be open, when the exhaust gas flow through or to the large turbine 7 is allowed.

A control of the turbocharger system of the second and the third embodiment can be realized similarly to the first embodiment. With respect to the second embodiment, in a low speed range, the three way valve is in a position to allow exhaust gas flow through a small turbine and inhibit exhaust gas flow through a large turbine, in a medium speed range, the three way valve is in a position to allow exhaust gas flow through both turbines, and, in a high engine speed range, the three way valve is in a position to allow exhaust gas flow through the large turbine and to interrupt exhaust gas flow through the small turbine. With respect to the third embodiment, turbine valves are switched according to the small turbine valve 19 and the large turbine valve 17 of the first embodiment.

A modified mode of operation of the turbocharger system according to the first embodiment of the invention is shown in Fig. 4. According to Fig. 4, an operation of a turbocharger system is partitioned into two operation ranges being a low engine speed range and a high engine speed range. For this modified mode of operation, a shut-off valve for a small turbine is not necessarily required and can be discarded. In a low engine speed range, a small turbocharger is operated, whereas a large turbocharger is deactivated, i.e. a large turbine valve is closed. In a high engine speed range, both of the small turbocharger and the large turbocharger are in operation, i.e. the large turbine valve is open and the large and the small turbine and are in operation. The low engine speed range varies from zero up to about 1500 rpm, whereas the high engine speed range starts at about 1500 rpm. According to this modified mode of operation, either the small turbocharger or the small and additionally the large turbocharger is/are in operation.

The invention is not restricted to the above embodiments. The turbocharger system can also comprise three turbochargers being arranged in series on the compressor side and in parallel on the turbine side.

Further, either the small turbocharger or the large turbocharger or both may be wastegate turbochargers. These wastegate turbochargers may be operated analogous to the turbochargers of the first embodiment.

The turbine valves may be control valves having a fully closed position and which may be controlled to open and close gradually in accordance to the engine speed.

Also, an on/off switchable or continuously controllable bypass may be arranged to bypass the parallel turbine arrangement.

Further, an interstage air cooler may be provided between the large compressor and the small compressor.

The invention may be embodied for V-engines and inline engines of any number of cylinders.

## Claims

1. Turbocharger system for an engine (1) comprising only two compressors and two turbines, wherein a small and a large compressor (11, 5) are arranged in series, a small and a large turbine (13, 7) are arranged in parallel, and a shut-off arrangement (15) is adapted to interrupt exhaust gas flow through the small turbine (13) while allowing the exhaust gas flow through the large turbine (7).

2. Turbocharger system according to claims 1 to 4, wherein the small turbine (13) and/or the large turbine (7) comprise(s) a variable nozzle device.

3. Turbocharger system according to claim 1 or 2, wherein the shut-off arrangement (15) comprises a least one of a small turbine shut-off valve (19) and a large turbine shut-off valve (17) being arranged upstream or downstream the respective turbine.

4. Turbocharger system according to claim 1 or 2, wherein the shut-off arrangement (15) is a three way valve.

5. Turbocharger system according to claim 1 or 2, wherein the shut-off arrangement (15) is a variable nozzle device of each turbine.

6. Turbocharger system according to claims 1 to 5, wherein a small compressor bypass line (37) with a small compressor bypass valve (35) bypasses the small compressor (11).

7. Turbocharger system according to claims 1 to 6, wherein a large compressor bypass line with a large compressor bypass valve bypasses the large compressor (5).

8. Turbocharger system according to claims 1 to 7, wherein the large compressor (5) is arranged upstream the small compressor (11).

9. Turbocharger system according to claims 1 to 8, wherein a charge air cooler (41) is connected to an intake line (37) downstream the small compressor (11).

10. Turbocharger system according to claims 1 to 9, wherein an air filter (43) is connected to an intake line (37) upstream the large compressor (5).

11. Engine comprising a turbocharger system according to claims 1 to 10, wherein the engine is a V engine.

12. Method for controlling a turbocharger system having the features of claims 1 to 10, wherein
in a low engine speed range:
the exhaust gas flow through the large turbine (7) is interrupted by the shut-off arrangement (15) and the exhaust gas flow through the small turbine (13) is allowed;
in a medium engine speed range:
the exhaust gas flow through the small turbine (13) and the large turbine (7) is allowed;
and in a high engine speed range:
the exhaust gas flow through the small turbine (13) is interrupted by the shut-off arrangement (15) and the exhaust gas flow through the large turbine (7) is allowed.

13. Method according to claim 12, wherein, in particular, each of the turbines (7, 11) comprises a variable nozzle device, wherein
in the low engine speed range:
the variable nozzle device of the small turbine (13) is controlled to open gradually with increasing engine speed and the variable nozzle device of the large turbine (7) is closed or maintained in a given fixed position;
in the medium engine speed range:
the variable nozzle device of the small turbine (13) is controlled to close gradually with increasing engine speed and the variable nozzle device of the large turbine (7) is controlled to open gradually with increasing engine speed;
and in the high engine speed range:
the variable nozzle device of the large turbine (7) is controlled to open gradually with increasing engine speed and the variable nozzle device of the small turbine (13) is closed or maintained in a given fixed position.

14. Method according to claims 12 or 13, wherein, in particular, the small compressor (11) has a small compressor bypass line (37) with a small compressor bypass valve (35), wherein
in the low engine speed range:
the small compressor bypass valve (35) is closed;
in the medium engine speed range:
the small compressor bypass valve (35) is closed;
and in the high engine speed range:
the small compressor bypass valve (35) is open.

15. Method according to claims 12 to 14, wherein
the low engine speed range is 0 to 2000 rpm,
the medium engine speed range is 1000 to 2500 rpm, and
the high engine speed range is 2000 rpm and more.

16. Method for controlling a turbocharger system having the features of claims 1 to 10, wherein
in a low engine speed range:
the exhaust gas flow through the large turbine (7) is interrupted by the shut-off arrangement (15) and the exhaust gas flow through the small turbine (13) is allowed; and
in a high engine speed range:
the exhaust gas flow through the small turbine (13) and the large turbine (7) is allowed.

17. Method for controlling a turbocharger system according to claim 16 wherein, each of the turbines (7, 11) comprises a variable nozzle device, wherein
in the low engine speed range:
the variable nozzle device of the small turbine (13) is controlled to open gradually with increasing engine speed and the variable nozzle device of the large turbine (7) is closed or maintained in a given fixed position; and
in the high engine speed range:
the variable nozzle device of the small turbine (13) is controlled to close gradually with increasing engine speed and the variable nozzle device of the large turbine (7) is controlled to open gradually with increasing engine speed.

18. Method according to claims 16 or 17, wherein
the low engine speed range is 0 to 2000 rpm, and
the high engine speed range is 1000 rpm and more.

## Patentansprüche

1. Turboladersystem für einen Verbrennungskraftmotor (1), das nur zwei Kompressoren und zwei Turbinen aufweist, wobei ein kleiner und ein großer Kompressor (11, 5) in Reihe angeordnet sind, eine kleine und eine große Turbine (13, 7) parallel angeordnet sind und eine Abschaltungsanordnung (15) angepasst ist, um eine Abgasströmung durch die kleine Turbine (13) zu unterbrechen, während sie die Abgasströmung durch die große Turbine (7) zulässt.

2. Turboladersystem nach Ansprüchen 1 bis 4, wobei die kleine Turbine (13) und/oder die große Turbine (7) eine variable Düsenvorrichtung aufweisen/-t.

3. Turboladersystem nach Anspruch 1 oder 2, wobei die Abschaltungsanordnung (15) zumindest eins von einem Kleinturbinenabschaltventil (19) und einem Großturbinenabschaltventil (17) aufweist, das stromaufwärtig oder stromabwärtig der jeweiligen Turbine angeordnet ist.

4. Turboladersystem nach Anspruch 1 oder 2, wobei die Abschaltungsanordnung (15) ein Drei-Wege-Ventil ist.

5. Turboladersystem nach Anspruch 1 oder 2, wobei die Abschaltungsanordnung (15) eine variable Düsenvorrichtung jeder Turbine ist.

6. Turboladersystem nach Anspruch 1 bis 5, wobei eine Kleinkompressorbypassleitung (37) mit einem Kleinkompressorüberbrückungsventil (35) den kleinen Kompressor (11) überbrückt.

7. Turboladersystem nach Anspruch 1 bis 6, wobei eine Großkompressorüberbrückungsleitung mit einem Großkompressorüberbrückungsventil den großen Kompressor (5) überbrückt.

8. Turboladersystem nach Anspruch 1 bis 7, wobei der große Kompressor (5) stromaufwärtig des kleinen Kompressors (11) angeordnet ist.

9. Turboladersystem nach Anspruch 1 bis 8, wobei ein Ladeluftkühler (41) mit einer Einlassleitung (37) stromabwärtig des kleinen Kompressors (11) verbunden ist.

10. Turboladersystem nach Anspruch 1 bis 9, wobei ein Luftfilter (43) mit einer Einlassleitung (37) stromaufwärtig des großen Kompressors (5) verbunden ist.

11. Verbrennungsmotor, der ein Turboladersystem nach Anspruch 1 bis 10 aufweist, wobei der Motor ein V-Motor ist.

12. Verfahren zum Steuern eines Turboladersystems, das die Merkmale von Anspruch 1 bis 10 hat, wobei
in einem niedrigen Motordrehzahlbereich:
die Abgasströmung durch die große Turbine (7) durch die Abschaltungsanordnung (15) unterbrochen wird und die Abgasströmung durch die kleine Turbine (13) zugelassen wird;
in einem mittleren Motordrehzahlbereich:
die Abgasströmung durch die kleine Turbine (13) und die große Turbine (7) zugelassen wird;
und in einem hohen Motordrehzahlbereich:
die Abgasströmung durch die kleine Turbine (13) durch die Abschaltungsanordnung (15) unterbrochen wird und die Abgasströmung durch die große Turbine (7) zugelassen wird.

13. Verfahren nach Anspruch 12, wobei, insbesondere jede der Turbinen (7, 11) eine variable Düsengeometrieverstellung aufweist, wobei
in dem unteren Motordrehzahlbereich:
die variable Düsenvorrichtung der kleinen Turbine (13) gesteuert wird, um sich allmählich mit steigender Motordrehzahl zu öffnen, und die variable Düsenvorrichtung der großen Turbine (7) geschlossen wird oder in einer vorgegebenen festen Stellung gehalten wird;
in dem mittleren Motordrehzahlbereich:
die variable Düsenvorrichtung der kleinen Turbine (13) gesteuert wird, um sich allmählich mit steigender Motordrehzahl zu schließen, und die variable Düsenvorrichtung der großen Turbine (7) gesteuert wird, um sich allmählich mit steigender Motordrehzahl zu öffnen.
und in dem hohen Motordrehzahlbereich:
die variable Düsenvorrichtung der großen Turbine (7) gesteuert wird, um sich allmählich mit steigender Motordrehzahl zu öffnen, und die variable Düsenvorrichtung der kleinen Turbine (13) geschlossen wird oder in einer vorgegebenen festen Stellung gehalten wird.

14. Verfahren nach Anspruch 12 oder 13, wobei, insbesondere der kleine Kompressor (11) eine Kleinkompressorüberbrückungsleitung (37) mit einem Kleinkompressorüberbrückungsventil (35) hat, wobei
in dem unteren Motordrehzahlbereich:
das Kleinkompressorüberbrückungsventil (35) geschlossen wird;
in dem mittleren Motordrehzahlbereich:
das Kleinkompressorüberbrückungsventil (35) geschlossen wird;
in dem hohen Motordrehzahlbereich:
das Kleinkompressorüberbrückungsventil (35) geöffnet wird.

15. Verfahren nach Anspruch 12 bis 14, wobei
der untere Motordrehzahlbereich 0 bis 2000 min⁻¹ ist,
der mittlere Motordrehzahlbereich 1000 bis 2500 min⁻¹ ist, und
der hohe Motordrehzahlbereich 2000 min⁻¹ und mehr ist.

16. Verfahren zum Steuern eines Turboladersystems, das die Merkmale von Anspruch 1 bis 10 hat, wobei
in einem unteren Motordrehzahlbereich:
die Abgasströmung durch die große Turbine (7) durch die Abschaltungsanordnung (15) unterbrochen wird und die Abgasströmung durch die kleine Turbine (13) zugelassen wird; und
in einem hohen Motordrehzahlbereich:
die Abgasströmung durch die kleine Turbine (13) und die große Turbine (7) zugelassen wird.

17. Verfahren zum Steuern eines Turboladersystems nach Anspruch 16, wobei jede der Turbinen (7, 11) eine variable Düsenvorrichtung aufweist, wobei
in dem unteren Motordrehzahlbereich:
die variable Düsenvorrichtung der kleinen Turbine (13) gesteuert wird, um mit steigender Motordrehzahl allmählich zu öffnen, und die variable Düsenvorrichtung der großen Turbine (7) geschlossen wird oder in einer vorgegebenen festen Stellung gehalten wird; und
in dem hohen Motordrehzahlbereich:
die variable Düsenvorrichtung der kleinen Turbine (!3) gesteuert wird, um mit steigender Motordrehzahl allmählich zu schließen, und die variable Düsenvorrichtung der großen Turbine (7) gesteuert wird, um mit steigender Motordrehzahl allmählich zu öffnen.

18. Verfahren nach Anspruch 16 oder 17, wobei
der untere Motordrehzahlbereich 0 bis 2000 min⁻¹ ist, und
der hohe Motordrehzahlbereich 1000 min⁻¹ und mehr ist.

## Revendications

1. Système de turbocompresseur pour un moteur (1) comprenant seulement deux compresseurs et deux turbines, un petit compresseur et un gros compresseur (11, 5) étant agencés en série, une petite turbine et une grosse turbine (13, 7) étant agencées en parallèle, et un agencement de coupure (15) étant prévu pour interrompre l'écoulement de gaz d'échappement à travers la petite turbine (13) tout en permettant l'écoulement de gaz d'échappement à travers la grosse turbine (7).

2. Système de turbocompresseur selon la revendication 1, dans lequel la petite turbine (13) et/ou la grosse turbine (7) comprend ou comprennent un dispositif de tuyère variable.

3. Système de turbocompresseur selon la revendication 1 ou 2, dans lequel l'agencement de coupure (15) comprend au moins une soupape de coupure (19) pour la petite turbine et une soupape de coupure (17) pour la grosse turbine, agencées en amont ou en aval de la turbine respective.

4. Système de turbocompresseur selon la revendication 1 ou 2, dans lequel l'agencement de coupure (15) est une soupape à trois voies.

5. Système de turbocompresseur selon la revendication 1 ou 2, dans lequel l'agencement de coupure (15) est un dispositif à tuyère variable de chaque turbine.

6. Système de turbocompresseur selon les revendications 1 à 5, dans lequel une ligne de dérivation (37) de petit compresseur avec une soupape de dérivation (35) de petit compresseur contourne le petit compresseur (11).

7. Système de turbocompresseur selon les revendications 1 à 6, dans lequel une ligne de dérivation de gros compresseur avec une soupape de dérivation de gros compresseur contourne le gros compresseur (5).

8. Système de turbocompresseur selon les revendications 1 à 7, dans lequel le gros compresseur (5) est agencé en amont du petit compresseur (11).

9. Système de turbocompresseur selon les revendications 1 à 8, dans lequel un refroidisseur d'air de suralimentation (41) est connecté à une ligne d'admission (37) en aval du petit compresseur (11).

10. Système de turbocompresseur selon les revendications 1 à 9, dans lequel un filtre à air (43) est connecté à une ligne d'admission (37) en amont du gros compresseur (5).

11. Moteur comprenant un système de turbocompresseur selon les revendications 1 à 10, dans lequel le moteur est un moteur en V.

12. Procédé de commande d'un système de turbocompresseur ayant les caractéristiques des revendications 1 à 10, dans lequel :
dans une plage de basses vitesses du moteur :
l'écoulement de gaz d'échappement à travers la grosse turbine (7) est interrompu par l'agencement de coupure (15) et l'écoulement de gaz d'échappement à travers la petite turbine (13) est autorisé ;
dans une plage de vitesses moyennes du moteur :
l'écoulement de gaz d'échappement à travers la petite turbine (13) et la grosse turbine (7) est autorisé ;
et dans une plage de hautes vitesses du moteur :
l'écoulement de gaz d'échappement à travers la petite turbine (13) est interrompu par l'agencement de coupure (15) et l'écoulement de gaz d'échappement à travers la grosse turbine (7) est autorisé.

13. Procédé selon la revendication 12, dans lequel, en particulier,
chacune des turbines (7, 11) comprend un dispositif à tuyère variable,
dans lequel
dans la plage de basses vitesses du moteur :
le dispositif à tuyère variable de la petite turbine (13) est commandé de manière à s'ouvrir progressivement avec l'augmentation de la vitesse du moteur, et le dispositif à tuyère variable de la grosse turbine (7) est fermé ou est maintenu dans une position fixe donnée ;
dans la plage de vitesses moyennes du moteur :
le dispositif à tuyère variable de la petite turbine (13) est commandé de manière à se fermer progressivement avec l'augmentation de la vitesse du moteur et le dispositif à tuyère variable de la grosse turbine (7) est commandé de manière à s'ouvrir progressivement avec l'augmentation de la vitesse du moteur ;
et dans la plage de hautes vitesses du moteur :
le dispositif à tuyère variable de la grosse turbine (7) est commandé de manière à s'ouvrir progressivement avec l'augmentation de la vitesse du moteur et le dispositif à tuyère variable de la petite turbine (13) est fermé ou est maintenu dans une position fixe donnée.

14. Procédé selon la revendication 12 ou 13, dans lequel, en particulier, le petit compresseur (11) a une ligne de dérivation (37) pour le petit compresseur, avec une soupape de dérivation (35) de petit compresseur,
dans lequel
dans la plage de basses vitesses du moteur :
la soupape de dérivation (35) de petit compresseur est fermée ;
dans la plage de vitesses moyennes du moteur :
la soupape de dérivation (35) de petit compresseur est fermée ; et
dans la plage de hautes vitesses du moteur :
la soupape de dérivation (35) de petit compresseur est ouverte.

15. Procédé selon les revendications 12 à 14, dans lequel :
la plage de basses vitesses du moteur est de 0 à 2000 t/min,
la plage de vitesses moyennes du moteur est de 1000 à 2500 t/min, et
la plage de hautes vitesses du moteur est de 2000 t/min et plus.

16. Procédé de commande d'un système de turbocompresseur ayant les caractéristiques des revendications 1 à 10, dans lequel :
dans une plage de basses vitesses du moteur :
l'écoulement de gaz d'échappement à travers la grosse turbine (7) est interrompu par l'agencement de coupure (15) et l'écoulement de gaz d'échappement à travers la petite turbine (13) est autorisé ; et
dans une plage de hautes vitesses du moteur :
l'écoulement de gaz d'échappement à travers la petite turbine (13) et la grosse turbine (7) est autorisé.

17. Procédé de commande d'un système de turbocompresseur selon la revendication 16, dans lequel chacune des turbines (7, 11) comprend un dispositif à tuyère variable, dans lequel :
dans la plage de basses vitesses du moteur :
le dispositif à tuyère variable de la petite turbine (13) est commandé de manière à s'ouvrir progressivement avec l'augmentation de la vitesse du moteur et le dispositif à tuyère variable de la grosse turbine (7) est fermé ou maintenu dans une position fixe donnée ; et
dans la plage de hautes vitesses du moteur :
le dispositif à tuyère variable de la petite turbine (13) est commandé de manière à se fermer progressivement avec l'augmentation de la vitesse du moteur et le dispositif à tuyère variable de la grosse turbine (7) est commandé de manière à s'ouvrir progressivement avec l'augmentation de la vitesse du moteur.

18. Procédé selon la revendication 16 ou 17, dans lequel
la plage de basses vitesses du moteur est de 0 à 2000 t/min, et
la plage de hautes vitesses du moteur est de 1000 t/min et plus.
